# EUROPÄISCHE PATENTANMELDUNG

(11) **EP 1 240 931 A1**
(43) Veröffentlichungstag der Anmeldung: **18.09.2002**
(21) Anmeldenummer: 02004539.9
(22) Anmeldetag: 27.02.2002
(51) Int. Cl.: B01D 29/11, B01D 29/21, B01D 46/52, B05C 5/02, B05C 11/10

(54) **Verfahren und Vorrichtung zur Herstellung eines Filterelementes**

(30) Priorität: 16.03.2001 DE 10112839
(71) Anmelder: JACOBI Systemtechnik GmbH, 01474 Weissig bei Dresden (DE)
(72) Erfinder: Kleingünther, Ingo, 01187 Dresden (DE); Kleingünther, Lars, 01309 Dresden (DE)
(74) Vertreter: Heinze, Ekkehard, Dipl.-Phys. Dr.

(57) **Zusammenfassung**

Verfahren und Vorrichtung zur Herstellung eines Fluidfilterelementes, das eine zickzack- oder mäanderförming gefaltete und durch Miteinander-Verkleben der Faltenwände fixierte Lage eines flächigen Filtermaterials umfaßt, wobei das Verfahren die Schritte: (a) Verflüssigen eines Schmelzklebers und Vorratshaltung im flüssigen Zustand (101), (b) Bereitstellen eines Heißschaumklebers durch Aufschäumen (115) des verflüssigten Schmelzklebers, (c) Zuführen (113) des Heißschaumklebers zu einer Auftrageinrichtung (125) und (d) Aufbringen des Heißschaumklebers aus mehreren Auftragdüsen (127) oder -nadeln der Auftrageinrichtung auf des Filtermaterial aufweist, wobei der Schritt (b) nahe am Auftragort des Heißschaumklebers ausgeführt wird und der Schritt (c) ein Zurückfördern (129) von der Auftrageinrichtung zugeführtem, aber nicht aufgebrachtem Heißschaumkleber in den Strom (121) des aus dem Vorrat zugeführten Heißschaumklebers umfaßt.

## Beschreibung

Die Erfindung betrifft ein Verfahren zur Herstellung eines Fluidfilterelementes nach dem Oberbegriff des Anspruchs 1 sowie eine Anordnung nach dem Oberbegriff des Anspruchs 7 zur Durchführung dieses Verfahrens.

Fluidfilterelemente der im Oberbegriff von Anspruch 1 bzw. 7 erwähnten Art sind seit langem bekannt und zur Schwebstofffilterung von Fluiden, insbesondere als Luftfilterelemente in der Klimatechnik und bei Verbrennungskraftmaschinen, massenhaft im praktischen Einsatz. Derartige Fluidfilter müssen - insbesondere im Einsatz als vorgeschaltetes Schwebstofffilter bei großen und teuren Verbrennungskraftmaschinen, wie etwa Gasturbinen - hohen Ansprüchen an die Lebensdauer und Zuverlässigkeit genügen, doch zugleich kostengünstig sein.

Diesbezüglich wurden in den letzten Jahren mit neuen Filterkonstruktionen und daran angepaßten, technologisch anspruchsvollen Verfahren zum Auftrag des Klebstoffs (wie in der WO99/28012 der Anmelderin beschrieben) wesentliche Fortschritte erreicht.

Insbesondere das in der genannten Druckschrift beschriebene Verfahren zur Aufbringung von Klebstofffäden mit gesteuerter Klebstoffmenge und Höhe pro Zeiteinheit fordert, daß die Klebstoff-Auftrageinrichtung permanent mit einem Heißschaumkleber mit exakt vorbestimmten und zeitlich wie räumlich (innerhalb der Klebstoff-Auftrageinrichtung) exakt konstant gehaltenen physikalischen Parametern versorgt wird. Bei Untersuchungen der Erfinder hat sich herausgestellt, daß Entmischungen des Heißschaumklebers auf dem Weg zur Auftrageinrichtung und in dieser selbst die Prozeßführung und die Qualität der hergestellten Fluidfilterelemente in erheblichem Maße nachteilig beeinflussen. Herkömmliche Einrichtungen zur Bereitstellung des Heißschaumklebers, die mehrstufige beheizbare Zahnradpumpen, welche in einem Aggregat gemeinsam mit einem beheizbaren Leimtank (Schmelztank) untergebracht sind, sowie eine die Auftrageinrichtung mit dem Leimtank verbindende Rücklaufleitung umfassen, genügen diesen Anforderungen nicht.

Der Erfindung liegt daher die Aufgabe der Bereitstellung eines verbesserten Verfahrens sowie einer verbesserten Anordnung der gattungsgemäßen Art zugrunde, mit denen-Fluidfilterelemente in hoher und konstanter Qualität hergestellt werden können. Insbesondere bestand die Aufgabe, eine verbesserte Verfahrensführung und Vorrichtung zur Bereitstellung und Zuführung des Heißschaumklebers zur Auftrageinrichtung anzugeben.

Diese Aufgaben werden hinsichtlich ihres Verfahrensaspektes durch ein Verfahren mit den Merkmalen des Anspruchs 1 und in ihrem Vorrichtungsaspekt durch eine Anordnung mit den Merkmalen des Anspruchs 7 gelöst.

Die Erfindung schließt den grundlegenden Gedanken ein, die Bereitstellung bzw. Konditionierung des Heißschaumklebers auf der Basis eines verflüssigten Schmelzklebers möglichst nahe am Ort des Aufbringens auf das Filtermaterial vorzunehmen. Hierdurch können nachteilige Entmischungen schon aufgrund der räumlichen (und damit auch zeitlichen) Nähe von Aufbereitung und Aufbringen des Schaumklebers weitestgehend ausgeschlossen werden. Wenn der Auftrag des Klebstoffs - wie in einer älteren, nicht veröffentlichten Patentanmeldung der Anmelderin beschrieben - mittels eines Düsenbalkens erfolgt, bei dem die zum Auftragen der verschiedenen Klebstoffspuren auf das Filtermaterial benötigten Düsen aus einem zusammenhängenden Reservoir mit Klebstoff versorgt werden, ist die Aufschäumeinrichtung zur Herstellung des Heißschaumklebers also nahe an diesem Düsenbalken anzuordnen.

Gemäß einem weiteren Aspekt der Erfindung wird ein zur Verhinderung von Absetzerscheinungen ausreichender Durchfluß in der Auftrageinrichtung (speziell dem oben erwähnten Düsenbalken) dadurch gewährleistet, daß nicht ausgetragener Heißschaumkleber kontinuierlich aus der Auftrageinrichtung wieder ab- und in den Aufbereitungsprozeß zurückgeführt wird. Dies geschieht gemäß der Erfindung nicht in den Leimtank, sondern in eine Zuführleitung stromabwärts der Aufbereitungs- bzw. Aufschäumeinrichtung.

Die erwähnten Maßnahmen führen dazu, daß auch bei sogenannten hoch aufgegasten Schaumklebern ein hinsichtlich der Gaskonzentration zeitlich und räumlich (im Düsenbalken) stabiler Schaum zum Auftrag auf das Filtermaterial bereitgestellt werden kann. In einer bevorzugten Ausführung ist sicherheitshalber unmittelbar stromaufwärts der Auftrageinrichtung (und stromabwärts des Einmündungspunktes der Rücklaufleitung) eine Restabilisierung des aus primär aufgeschäumtem und zurückgeführtem Schaum zusammengesetzten Kleberschaumes vorgesehen. Diese Restabilisierung durch Nachkonditionierung erfolgt durch turbolente Mischung in einem entsprechenden Wirbelmischer.

Eine besonders zuverlässige Verfahrensführung wird durch eine Steuerung aufgrund der Gaskonzentration des Heißschaumklebers - insbesondere in der Rücklaufleitung - erreicht. Hierzu dient eine nachfolgend auch als Schaumsensor bezeichnete Meßeinrichtung zur Gaskonzentrationsmessung des Heißschaumklebers. Diese ist mit einem Eingang einer Steuereinrichtung zur Steuerung des Aufbereitungsprozesses bzw. der Zuführung aus der Rücklaufleitung in die Haupt-Versorgungsleitung der Auftrageinrichtung verbunden. Aufgrund der Gaskonzentrationsmessung kann eine geregelte und damit vollautomatische Aufbereitung des Heißschaumklebers mit präziser Qualitätsorientierung erfolgen.

In einer zweckmäßigen Ausgestaltung des vorgeschlagenen Verfahrens erfolgt die Aufbereitung in enger Verbindung mit der Förderung des Heißschaumklebers durch Hintereinanderschalten zweier Förderschritte mit unterschiedlicher Förderleistung und zwischenzeitlicher Gaseinspeisung. In einem ersten Förderschritt wird der verflüssigte Schmelzkleber durch eine Leimpumpe mit einer ersten Förderleistung angefördert. Stromabwärts einer Gaszufuhröffnung, über die insbesondere trockener Stickstoff in die Klebstoffleitung eingepreßt wird, wird in einer zweiten Pumpe mit größerer Förderleistung - nachfolgend als Schaumpumpe bezeichnet - das Schmelzkleber-Gas-Gemisch, welches durch die Differenz der Fördermengen im Zusammenwirken mit dem Einpressen des Gases gebildet wurde, abgeführt.

Die oben erwähnte Steuerung der Aufbereitung wird in dieser Ausführung vorteilhaft als Steuerung der Förderleistung der Schaumpumpe vorgenommen. Diese Art der gesteuerten Klebstoffaufbereitung erfordert einen relativ geringen konstruktiven und steuerungstechnischen Aufwand und liefert gleichwohl einen Heißschaumkleber mit konstanten Parametern und hoher Schaumstabilität.

In einer zweckmäßigen Ausführung ist desweiteren in der (im Normalfall relativ langen) Verbindungsleitung zwischen dem beheizten Leimtank und der oben erwähnten Leimpumpe noch eine zusätzliche Pumpe vorgesehen, die nachfolgend als Vordruckpumpe bezeichnet wird. Die Leitung selbst ist zweckmäßigerweise beheizt, um den Wärmeverlust des verflüssigten Schmelzklebers auf dem Transportweg bis zur Auftrageinrichtung zu begrenzen. Dies ist bei längeren Leitungen deshalb erforderlich, weil die Temperatur des Klebers im Leimtank selbst nicht unbegrenzt erhöht werden kann, ohne daß das Material denaturiert ("verbrennt"), der Kleber beim Austrag aber noch eine bestimmte Temperatur haben muß.

In der Rücklaufleitung ist ausgangsseitig der Auftrageinrichtung zunächst zweckmäßigerweise ein Drosselventil angeordnet, mit dem der Systemdruck am Ausgang der Austrageinrichtung aufrecht erhalten werden kann, obwohl am Meßort der Gaskonzentrationsmessung ein geringerer Druck herrschen muß. Dem Drosselventil ist ein Überdruckventil zur Druckreduzierung nachgeschaltet, und auf dieses folgt der eigentliche Schaumsensor. Stromabwärts von diesem wird dann bevorzugt durch eine innerhalb der Rücklaufleitung angeordnete zweite Schaumpumpe wieder Systemdruck aufgebaut. Die weiter oben erwähnte Steuereinrichtung ist in einer bevorzugten Ausführung auch mit dieser zweiten Schaumpumpe verbunden und steuert den Klebstoffdruck.

Das oben beschriebene Konzept wird vorteilhaft realisiert durch einen modularen Aufbau der Aufbereitungsanlage, der im übrigen in rationeller Weise die Erstellung von Herstellungsanlagen nach kundenspezifischen Anforderungen erlaubt. Die Module bzw. Baugruppen sind funktionell selbständig und räumlich getrennt plazierbar. Speziell sind der Leimtank mit der Vordruckpumpe, der Pumpenblock aus Leimpumpe sowie erster und zweiter Schaumpumpe (mit zugehörigen Sicherheitseinrichtungen), der Schaumsensor mit zugehörigen Hilfseinrichtungen ("Gaskonzentrations-Überwachungsmodul"), der Mischer zur Nachkonditionierung ("Schaumegalisator") sowie ein Gasbehälter mit zugeordneter Dosiereinrichtung als einzelne Module in diesem Sinne ausgeführt. Die räumliche Einordnung der Baugruppen in eine Gesamtanlage erfolgt nach Kriterien der verfahrenstechnischen Optimierung sowie nach lokalen Gegebenheiten.

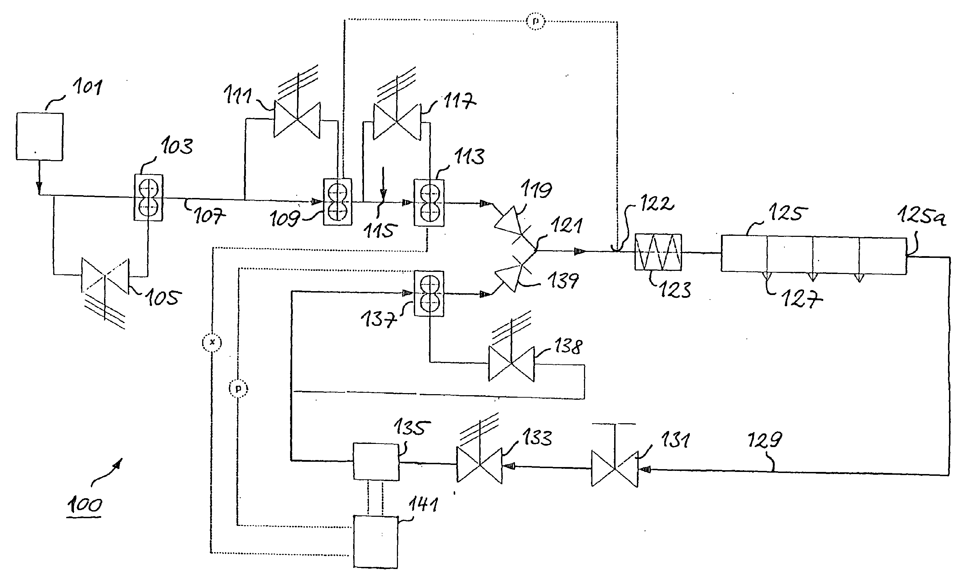

Vorteile und Zweckmäßigkeiten der Erfindung ergeben sich im übrigen aus den Unteransprüchen sowie der nachfolgenden Beschreibung eines bevorzugten Ausführungsbeispiels anhand der einzigen Figur. Diese zeigt eine Klebstoff-Aufbereitungsvorrichtung 100 zur Bereitstellung und Zuführung von Heißschaumkleber als Teil einer (nicht dargestellten) Anlage zur Herstellung von Fluidfilterelementen.

Die Klebstoff-Aufbereitungsvorrichtung 100 umfaßt einen beheizten, in bekannter Weise aufgebauten Leimtank 101 zum Aufschmelzen und zur Vorratshaltung eines Schmelzklebers, der hier bei einer Temperatur im Bereich zwischen 160°C und 200°C gehalten wird. Am drucklos betriebenen Leimtank 101 ist eine Vordruckpumpe 103 mit einem Sicherheits-Überdruckventil 105 angebracht, die den verflüssigten Schmelzkleber aus dem Leimtank 101 in eine beheizte Leimleitung 107 drückt. Die Leimleitung 107 führt zu einer Leimpumpe 109, der ebenfalls ein Sicherheits-Überdruckventil 111 zugeordnet ist.

Die Leimpumpe 109 arbeitet nach dem Prinzip der Verdrängerpumpe und fördert ein erster Fördervolumen V₁ in den Bereich einer Ansaugöffnung einer ersten Schaumpumpe 113, die ebenfalls als Verdrängerpumpe aufgebaut ist und ein Fördervolumen V₂ hat. Auch der Schaumpumpe 113 ist ein Sicherheits-Überdruckventil 117 zugeordnet. Die Verdrängerpumpen 109, 113 sind so ausgebildet, daß mittels einer Drehzahlsteuerung eine Volumendosierung mit linearer Kennlinie möglich ist. Zwischen der Leimpumpe 109 und der Schaumpumpe 113 ist in der Leimleitung (Haupt-Versorgungsleitung) 107 ein Gasanschluß 115 vorgesehen, über den von einem - nicht dargestellten - Vorratsbehälter trockener Stickstoff zugeführt wird.

Stromabwärts der Schaumpumpe 113 ist in der Haupt-Versorgungsleitung 107 ein Rückschlagventil 119 und stromabwärts von diesem ein Y-Stück 121 vorgesehen, an dem eine weitere, weiter unten genauer beschriebene Leitung in die Haupt-Versorgungsleitung einmündet. Stromabwärts des Y-Stückes 121 ist (optional) ein Druckfühler 122 und weiter stromabwärts ein Wirbelmischer 123 vorgesehen. Nahe von dessen Ausgang mündet die Haupt-Versorgungsleitung 107 in einen Düsenstock (Düsenbalken) 125 mit mehreren Klebstoff-Austragdüsen 127, über die der Heißschaumkleber auf ein (nicht dargestelltes) Filtermaterial ausgetragen wird.

Ein Ausgangsanschluß 125a des Düsenstocks 125 ist mit einer Rücklaufleitung 129 zur Realisierung eines Klebstoffumlaufes durch den Düsenstock 125 verbunden. Diese führt über ein Drosselventil 131 und ein Druckregelventil 133 zum Druckabbau zunächst zu einem Schaumsensor 135 zur Messung der Gaskonzentration des aus dem Düsenstock 125 zurückgeführten Klebeschaumes. Von dessen Ausgang führt die Rücklaufleitung 129 zu einer zweiten Schaumpumpe 137, wo wieder Klebstoffdruck aufgebaut wird. Auch der zweiten Schaumpumpe 137 ist ein Sicherheits-Überdruckventil 138 zugeordnet. Deren Ausgang schließlich ist über ein Rückschlagventil 139 mit dem zweiten Eingang des Y-Stückes 121 verbunden, in dessen anderem Eingang die Haupt-Versorgungsleitung 107 mündet.

Eine mit dem Schaumsensor 135 eingangsseitig verbundene Steuereinheit 141 ist über (nicht gesondert bezeichnete) Steuerleitungen mit Steuereingängen der ersten und zweiten Schaumpumpe 113, 137 verbunden.

Die Bereitstellung und Zuführung des Heißschaumklebers erfolgt mit Klebstoff-Aufbereitungsvorrichtungen 100 wie folgt:

Ein herkömmlicher, kommerziell verfügbarer Hotmelt wird als Granulat oder Block in den beheizten Leimtank 101 gegeben und dort drucklos verflüssigt. Der verflüssigte Schmelzkleber wird über die Vordruckpumpe 103 und den ersten, beheizten Abschnitt der Leimleitung 107 mit relativ geringem Wärmeverlust der Leimpumpe 109 zugeführt, die ihn mit dem Fördervolumen V₁ der ersten Schaumpumpe 113 zuführt. Diese hat ein größeres Fördervolumen V₂, und die Differenz der Fördervolumina bewirkt, daß über den Gasanschluß 115 zugeführter Stickstoff weitestgehend homogen in den flüssigen Schmelzkleber eingemischt wird und daraus ein Heißschaumkleber entsteht.

Der Heißschaumkleber wird nach passieren des Rückschlagventils 119 und des Y-Stücks 121 im Wirbelmischer 123 einer Nachkonditionierung unterzogen. Hierzu wird er unter Systemdruck durch ein feststehendes System gegeneinander versetzter Schaufeln gepreßt. Der nachkonditionierte Heißschaumkleber wird schließlich einem Leimkanal im Düsenstock 125 zugeführt.

Von dort gelangt ein Teil des Klebers über die Klebstoff-Auftragdüsen 127 sofort auf das Filtermaterial, während der nicht verbrauchte Teil über den Ausgangsanschluß 125a in die Rücklaufleitung 129 gelangt. Nach Abbau des Systemdrucks am Druckregelventil 133 auf etwa 2 bar wird am Schaumsensor 135 die Gaskonzentration des Klebers gemessen und ein entsprechendes Meßsignal an die Steuereinrichtung 141 übermittelt. Durch die zweite Schaumpumpe 137 wird in der Rücklaufleitung 129 wieder ein Arbeitsdruck p aufgebaut, und mit diesem Druck gelangt der zurückgeführte Klebstoffanteil über das Rückschlagventil 139 und das Y-Stück 121 wieder in die Haupt-Versorgungsleitung. Die Nachkonditionierung im Wirbelmischer 123 sorgt dafür, daß er mit dem frischen Heißschaumkleber homogenisiert wird.

Die Steuereinrichtung 141 steuert in Abhängigkeit vom Ausgangssignal des Schaumsensors 135 einerseits über die Ansteuerung der ersten Schaumpumpe 113 den Gasanteil % im originär zugeführten Heißschaumkleber und andererseits über die zweite Schaumpumpe 137 den Druck p in der Rücklaufleitung 129 und somit anhand von zwei Stellgrößen die physikalischen Parameter des Heißschaumklebers.

In der konkreten baulichen Ausführung bilden der Leimtank 101 und die Vordruckpumpe 103 (mit dem zugehörigen Sicherheits-Überdruckventil 105) eine erste Baugruppe 100A der Vorrichtung 100. Die Leimpumpe 109 und erste und zweite Schaumpumpe 113, 137 samt der zugehörigen Sicherheits-Überdruckventile 111, 117 und 138, bilden eine zweite zusammenhängende Baugruppe 100B (Pumpenmodul) zum Aufschäumen und zur Förderung des Klebstoffs. Der Wirbelmischer 123 bildet zusammen mit dem Düsenstock 125 eine dritte Baugruppe 100C. Das Drosselventil 131, das Überdruckventil 133 und der Schaumsensor 135 bilden ein viertes Modul 100D, in das gegebenenfalls auch die Steuereinrichtung 141 baulich einbezogen ist.

Die Ausführung der Erfindung ist nicht auf dieses Beispiel beschränkt, sondern ebenso in einer Vielzahl von Abwandlungen möglich, die im Rahmen fachgemäßen Handelns liegen.

### Bezugszeichenliste

- 100: Klebstoff-Aufbereitungsvorrichtung
- 100A, 100B, 100C, 100D: Baugruppe (Modul)
- 101: Leimtank
- 103: Vordruckpumpe
- 105, 111, 117, 138: Sicherheits-Überdruckventil
- 107: Leimleitung (Haupt-Versorgungsleitung)
- 109: Leimpumpe
- 113, 137: Schaumpumpe
- 115: Gasanschluß
- 119, 139: Rückschlagerventil
- 121: Y-Stück
- 122: Druckfühler
- 123: Wirbelmischer
- 125: Düsenstock (Düsenbalken)
- 125a: Ausgangsanschluß
- 127: Klebstoff-Auftragdüse
- 129: Rücklaufleitung
- 131: Drosselventil
- 133: Druckregelventil
- 135: Schaumsensor
- 141: Steuereinrichtung
- p: Systemdruck
- V₁, V₂: Fördervolumen
- %: Gaskonzentration

## Patentansprüche

1. Verfahren zur Herstellung eines Fluidfilterelementes, das eine zickzack- oder mäanderförmig gefaltete und durch Miteinander-Verkleben der Faltenwände fixierte Lage eines flächigen Filtermaterials umfaßt, wobei das Verfahren die Schritte:
(a) Verflüssigen eines Schmelzklebers und Vorratshaltung im flüssigen Zustand,
(b) Bereitstellen eines Heißschaumklebers durch Aufschäumen des verflüssigten Schmelzklebers,
(c) Zuführen des Heißschaumklebers zu einer Auftrageinrichtung und
(d) Aufbringen des Heißschaumklebers aus mehreren Auftragdüsen oder -nadeln der Auftrageinrichtung auf das Filtermaterial
aufweist,
**dadurch gekennzeichnet, daß**
der Schritt (b) nahe am Auftragort des Heißschaumklebers ausgeführt wird und der Schritt (c) ein Zurückfördern von der Auftrageinrichtung zugeführtem, aber nicht aufgebrachtem Heißschaumkleber in den Strom des aus dem Vorrat zugeführten Heißschaumklebers umfaßt.

2. Verfahren nach Anspruch 1,
**dadurch gekennzeichnet, daß**
der Heißschaumkleber stromabwärts des Einspeisungsortes des zurückgeförderten Anteiles durch turbulentes Mischen nachaufbereitet wird.

3. Verfahren nach Anspruch 1 oder 2,
**dadurch gekennzeichnet, daß**
die Gaskonzentration des Heißschaumklebers, insbesondere laufend, gemessen und der Schritt (b) in Abhängigkeit vom Meßergebnis gesteuert wird.

4. Verfahren nach einem der vorangehenden Ansprüche,
**dadurch gekennzeichnet, daß**
die Gaskonzentration des Heißschaumklebers, insbesondere laufend, gemessen und das Zurückfördern des nicht aufgebrauchten Heißschaumklebers in Abhängigkeit vom Meßergebnis gesteuert wird.

5. Verfahren nach einem der vorangehenden Ansprüche,
**dadurch gekennzeichnet, daß**
der Schritt (b) durch Hintereinanderschalten zweier Förderschritte des verflüssigten Schmelzklebers ausgeführt wird, wobei im zweiten Förderschritt eine größere Förderleistung als im ersten eingestellt ist und zwischen den beiden Förderschritten ein Gas, insbesondere trockener Stickstoff, angesaugt oder unter Druck zugeführt wird.

6. Verfahren nach Anspruch 5 und Anspruch 3 oder 4,
**dadurch gekennzeichnet, daß**
die Förderleistung im zweiten Förderschritt in Abhängigkeit von der gemessenen Gaskonzentration gesteuert wird.

7. Anordnung (100) zur Herstellung eines Fluidfilterelementes, das eine zickzack- oder mäanderförmig gefaltete und durch Miteinander-Verkleben der Faltenwände fixierte Lage eines flächigen Filtermaterials umfaßt, mit einer Vorrichtung zur Bereitstellung und Zuführung eines Heißschaumklebers zum Verkleben der Faltenwände, welche aufweist:
- einen beheizten Leimtank (101) zur Verflüssigung eines Schmelzklebers und Vorratshaltung im flüssigen Zustand,
- eine Aufschäumeinrichtung (109, 113, 115) zum Aufschäumen des Schmelzklebers zur Bereitstellung des Heißschaumklebers und
- eine Fördereinrichtung (113, 129, 137) zum Zuführen des Heißschaumklebers zu einer Auftrageinrichtung (125), wo er auf das Filtermaterial aufgetragen wird,
**dadurch gekennzeichnet, daß**
die Aufschäumeinrichtung nahe an der Auftrageinrichtung, insbesondere beabstandet vom Leimtank, angeordnet ist und die Fördereinrichtung eine Rücklaufleitung (129) aufweist, die einen Ausgang (125a) der Auftrageinrichtung (125) mit einem Anschluß (121) einer Leimzufuhrleitung (107) stromabwärts der Aufschäumeinrichtung verbindet.

8. Anordnung nach Anspruch 7,
**dadurch gekennzeichnet, daß**
in der Leimzufuhrleitung (107) stromabwärts des Anschlusses (121) der Rücklaufleitung (129) eine Nachaufbereitungseinrichtung (123), insbesondere ein Wirbelmischer, vorgesehen ist.

9. Anordnung nach Anspruch 7 oder 8,
**gekennzeichnet durch**
einen, insbesondere in der Rücklaufleitung (129) angeordneten, Schaumsensor (135) zur Erfassung der Gaskonzentration des Heißschaumklebers sowie
eine eingangsseitig mit dem Schaumsensor und ausgangsseitig mit der Aufschäumeinrichtung (109, 113, 115) und/oder Fördereinrichtung (113, 129, 137) verbundene Steuereinrichtung zu deren Steuerung in Abhängigkeit vom Ausgangssignal des Schaumsensors.

10. Anordnung nach einem der Ansprüche 7 bis 9,
**dadurch gekennzeichnet, daß**
die Aufschäum- und die Fördereinrichtung (109, 113, 115, 129, 137) integral aufgebaut sind und eine Leimpumpe (109) zum Fördern des -Schmelzklebers sowie eine stromabwärts der Leimpumpe angeordnete erste Schaumpumpe (113) zum Fördern des Heißschaumklebers sowie einen zwischen Leimpumpe und erster Schaumpumpe angeordneten Gasanschluß (115) zur Gaszufuhr aufweisen.

11. Anordnung nach einem der Ansprüche-7 bis 10,
**dadurch gekennzeichnet, daß**
der Leimtank (101), die Aufschäum- und Fördereinrichtung (109, 113, 115, 129, 137) sowie die Auftrageinrichtung (125), wahlweise mit einer Nachaufbereitungseinrichtung (123), als separate Module einer modularen Konstruktion ausgebildet sind.

12. Anordnung nach Anspruch 10 oder 11,
**dadurch gekennzeichnet, daß**
der Leimtank (101) und die Leimpumpe (109) über eine beheizte Leimleitung (107) miteinander verbunden sind, in der eine Vordruckpumpe (103) angeordnet ist.

13. Anordnung nach einem der Ansprüche 9 bis 12,
**dadurch gekennzeichnet, daß**
in der Rücklaufleitung (129) stromaufwärts des Schaumsensors (135) ein Drosselventil zur Aufrechterhaltung des Systemdrucks am Ausgang der Austrageinrichtung (125) und zwischen Drosselventil und Schaumsensor ein Überdruckventil (133) zum Druckabbau am Meßort der Gaskonzentration vorgesehen sind.

14. Anordnung nach einem der Ansprüche 7 bis 13,
**dadurch gekennzeichnet, daß**
in der Rücklaufleitung (129) stromabwärts des Schaumsensors (135) eine zweite Schaumpumpe (137) vorgesehen ist.

15. Anordnung nach einem der Ansprüche 7 bis 14, **gekennzeichnet durch**
eine ausgangsseitig mit der Aufschäum- und Fördereinrichtung (109, 113, 113, 129, 137) verbundene Steuereinrichtung (141) zur Steuerung der Gaskonzentration und/oder des Systemdrucks.

16. Anordnung nach Anspruch 15,
**dadurch gekennzeichnet, daß**
Ausgänge der Steuereinrichtung (141) mit Steuereingängen der ersten und zweiten Schaumpumpe (113, 137) verbunden sind.
